(19) **Europäisches Patentamt / European Patent Office / Office européen des brevets**

(11) **EP 4 574 762 A1**

(12) # EUROPEAN PATENT APPLICATION

(43) Date of publication:
25.06.2025 Bulletin 2025/26

(21) Application number: 23218226.1

(22) Date of filing: **19.12.2023**

(51) International Patent Classification (IPC):
***C01B 32/50*** (2017.01)    ***C10K 3/04*** (2006.01)

(52) Cooperative Patent Classification (CPC):
**C01B 32/50; C10K 3/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nederlandse Organisatie voor toegepast-natuurwetenschappelijk Onderzoek TNO**
**2595 DA 's-Gravenhage (NL)**

(72) Inventor: **The designation of the inventor has not yet been filed**

(74) Representative: **Nederlandsch Octrooibureau**
**P.O. Box 29720**
**2502 LS The Hague (NL)**

(54) ## CO2 PURIFICATION BY CHEMICAL LOOPING

(57)    The current invention concerns a chemical looping process for the oxidation of impurities in a $CO_2$ feedstock. The process is especially suitable for removing impurities from a pre-combustion $CO_2$ feedstock.

**EP 4 574 762 A1**

## Description

### Technical Field

The present invention is in the field of $CO_2$ purification of $CO_2$ rich streams. In particular, the invention concerns the further purification of the $CO_2$ product of precombustion $CO_2$ capture processes.

### Introduction

Carbon capture and storage (CCS) and carbon capture and utilization (CCU) refer to processes wherein a carbon dioxide ($CO_2$) stream is captured from an industrial process. The $CO_2$ is transported to long term storage (CCS) or utilized as starting material in further applications (CCU). The industrial process from which the $CO_2$ is obtained may be the combustion (oxidation) of fossil fuels, waste, or biomass. Combustion may be in the presence of air or in an atmosphere consisting of pure oxygen and $CO_2$ (oxyfuel combustion). Examples of such post-combustion $CO_2$ sources are flue gasses of energy plants, waste gasses of cement production and the like. $CO_2$ may also be obtained by pre-combustion $CO_2$ capture, from energy-containing streams, such as streams originating from the pyrolysis of fossil fuels, waste or biomass, in which fossil fuels, waste or biomass are heated in the presence of no or a substoichiometric amount of oxygen (steam) and converted into syngas, a mixture of mainly CO, $CO_2$ and $H_2$. The primary aim of capturing $CO_2$ in pre-combustion processes is to prevent the $CO_2$ to enter the atmosphere whilst utilizing the energy present in the fossil fuel or biomass. In this way such a combustion process may become 'CO$_2$-neutral'. $CO_2$ removal in post-combustion is an end-of-pipe solution, needing no specific process integration. Instead, the primary aim in pre-combustion processes is to convert the biomass or fossil fuel in useful building blocks. $CO_2$ separation is an integrated part of the process. Separation of $CO_2$ from post-combustion and pre-combustion sources is known in the art. During separation often some minor components (impurities) are in the resulting $CO_2$ stream. The origin of the $CO_2$ stream, either pre-combustion or post-combustion, affects the type and concentration of the impurities. Consequently, for the removal of impurities different technologies need to be considered.

Carbon dioxide purity is an important criterion in any carbon capture technology due to technical, economic and safety requirements for transportation, storage, and conversion. The influence of the main impurities on the different sections of the CCS/CCU chain are reviewed by Wang et al. ("Carbon recycling - An immense resource and key to a smart climate engineering: A survey of technologies, cost and impurity impact." Renew. Sustain. Energy Rev. 2020, 131, 110010). For example, impurities influence the energy consumption in compressing $CO_2$. It was found that even small amount of impurities led to an increase in compression work. Transportation is also greatly affected by impurities in the $CO_2$ stream in terms of pipeline design and safe operation, not to mention health and environmental issues in case of gas leakage. Moreover, impurities may lead to acidic species causing corrosion issues during transport and storage. A consequence of corrosion is the formation of leaks, where toxic species like sulphides and CO can lead to health and environmental problems.

The type of impurities in the $CO_2$ stream is influenced by the process employed to obtain the $CO_2$. A summary of the impurities observed downstream of the main $CO_2$ capture technologies, oxyfuel combustion, pre-combustion, and post-combustion, was performed by Porter et al. ("The range and level of impurities in CO2 streams from different carbon capture sources." Int. J. Greenh. Gas Control 2015, 36, 161-174). Porter et al. show that the type of impurities in the $CO_2$ stream greatly depends on the capture technology employed. For example, in pre-combustion processes partial oxidation products are produced in significant quantities, which is different to post-combustion capture where complete oxidation occurs. In post-combustion $CO_2$ streams typically some oxygen ($O_2$) is present, whilst $O_2$ is absent in precombustion $CO_2$ streams. In contrary in post-combustion processes $CH_4$ and $H_2$ are absent, and CO is only present in very low concentrations (typically much lower than 0.02 mol%), whilst pre-combustion streams typically comprise higher concentrations of these components. The type of purification technique employed depends on the type of impurities present.

WO 2016/145034 provides a process for removing impurities from a post-combustion $CO_2$ stream; after power generation from the combustion of coal. The process relies on an oxygen uncoupling (CLOU) material. WO 2016/145034 does not concern impurities removal from a $CO_2$ stream obtained from pre-combustion processes.

A common impurity in pre-combustion $CO_2$ streams is CO, which is typically caused by incomplete pyrolysis and incomplete separation of $CO_2$ from the obtained syngas. The removal of minor to trace amounts of CO from a concentrated $CO_2$ stream is not trivial, because of the similarities in physicochemical properties between CO and $CO_2$. Existing solutions, for example oxycombustion, suffer from the fact that it is difficult or even impossible to remove all traces of Hz/CO while not introducing new impurities, such as oxygen.

There remains a need in the art for a process to purify a $CO_2$ stream, in particular pre-combustion $CO_2$. There is especially a need for processes that do not introduce new impurities in the $CO_2$ stream.

## Summary of the invention

The inventors have surprisingly found that chemical looping can be used to purify a $CO_2$ stream by oxidizing the impurities in such $CO_2$ stream. The process does not introduce new impurities. Moreover, the process can reduce the amount of different type of impurities in one step, and/or convert different kind of difficult to separate impurities to easily separable impurities. In addition, the process can be run with several setups and in different reactor types making it easy to adjust to different needs. Furthermore, the process is able to generate steam which may be integrated in the upstream $CO_2$ capture unit lowering the energy demand. A further advantage of the process is that it requires no critical raw materials but instead relies on affordable metal oxides. The process employs materials that are very robust and do not create breakdown products.

Hence, the invention concerns a process for the oxidation of impurities in a $CO_2$ feedstock comprising impurities, wherein the $CO_2$ feedstock comprises more than 80 mol% $CO_2$ on total of the dry $CO_2$ feedstock, wherein the $CO_2$ feedstock and an oxidant are provided to a chemical looping reactor comprising a redox catalyst, and wherein the impurities in the $CO_2$ feedstock are oxidized when the $CO_2$ feedstock is provided to the chemical looping reactor. Preferably the $CO_2$ feedstock and an oxidant are sequentially provided. Preferably the redox catalyst is a metal oxide. In a preferred embodiment, the $CO_2$ feedstock is obtained from a pre-combustion process so preferably the $CO_2$ feedstock is a pre-combustion $CO_2$ feedstock. Preferably the the impurities are oxidizable impurities. Oxidizable impurities are impurities that are oxidized by the redox catalyst at a temperature in the range of 100 - 1200°C. Preferably, the impurities are one or more of CO, $H_2$, and $CH_4$, more preferably one or more of CO and $H_2$. CO, $H_2$, and $CH_4$ are oxidizable impurities. Preferably, these impurities are oxidized to $CO_2$ and $H_2O$, wherein optionally the $H_2O$ is removed from the treated $CO_2$ feedstock in a subsequent step, preferably by condensation. The process for the oxidation of impurities in a $CO_2$ feedstock may alternatively be named a process for increasing the content of $CO_2$ in a $CO_2$ feedstock, wherein the $CO_2$ content is increased compared to the $CO_2$ feedstock prior to the process. The process may also be named a process for purification of a $CO_2$ feedstock.

In a further preferred embodiment, the invention concerns a process for obtaining a purified $CO_2$ feedstock comprising:

I. pyrolysis, partial oxidation, steam reforming, dry reforming, autothermal reforming, or gasification of biomass, waste and/or fossil fuel,
II. separating the $CO_2$ feedstock from the pyrolysis, partial oxidation, steam reforming, dry reforming, autothermal reforming, or gasification product wherein the $CO_2$ feedstock comprises more than 80 mol% $CO_2$ on total of the dry $CO_2$ feedstock,
III. subjecting the $CO_2$ feedstock to the process for the oxidation of impurities in a $CO_2$ feedstock according to any one of claims 1-13 to deliver the purified $CO_2$ feedstock, and
IV. optionally separation of $H_2O$ from the purified $CO_2$ feedstock by condensation.

In the process of the invention, the redox catalyst is sequentially reduced and oxidized in the chemical looping reactor. This process involves the redox pair redox catalyst / reduced redox catalyst, preferably metal oxide / reduced metal oxide. The metal oxide may be written as a molecular formula so as $Me_XO_Y$ wherein the subscripts x and y indicate the number of metal atoms and oxygen atoms in the metal oxide. In case the metal oxide is reduced, the ratio of Me to O is higher and therefore the number of oxygen atoms is lower with an amount $\delta$, so the reduced metal oxide may be written as $Me_XO_{Y-\delta}$. The choice of the redox catalyst, and consequently the redox pair, influences the thermodynamics of the process. Preferably, the redox catalyst is a metal oxide, more preferably selected from the list consisting of iron oxide, copper oxide, nickel oxide, manganese oxide, cobalt oxide. The inventors have surprisingly found that copper oxide and iron oxide are particularly advantageous, since complete conversion of CO to $CO_2$ is thermodynamically feasible with these redox catalysts. The inventors also found that iron oxide is even more preferred. Firstly, by using iron oxide instead of copper oxide more steam is obtainable in the process that can be advantageously recycled. Secondly, contrary to copper, under typical reaction conditions no inert material is required to avoid sintering for iron oxide, which allows for a smaller reactor and a simpler redox catalyst design. Therefore, preferably the redox catalyst is a metal oxide, more preferably selected from iron oxide, copper oxide, and combinations thereof, even more preferably the redox catalyst is iron oxide, most preferably the redox catalyst is $Fe_2O_3$.

## Detailed Description

_General Definitions_

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described below with reference to a number of exemplary embodiments. Modifications and alternative implementations of some parts or elements are possible and are included in the scope of protection as defined in the appended claims. All citations of literature and patent documents are hereby incorporated by reference.

Bar stands for bar absolute and concerns the pressure that is zero-referenced against a perfect vacuum. 1 bar is 100,000 N/m$^2$. 1 bar is 100,000 Pascal.

The term "chemical looping" as used herein refers to an process comprising two steps, wherein the first step involves reduction of a redox catalyst to obtained a reduced redox catalyst, preferably a metal oxide is reduced from $Me_XO_Y$ to $Me_XO_{Y-\delta}$, and the second step involves oxidation of the reduced redox catalyst to regenerate the redox catalyst, preferably $Me_XO_{Y-\delta}$ is oxidised to $Me_XO_Y$. Typically, the steps are repeated, so after the second step the first step is carried out and so on. The reduction is by feeding a $CO_2$ feedstock comprising impurities; the oxidation is by feeding an oxidant. These feedstocks are sequentially provided, so first a first feedstock is provided and then a second feedstock is provided. Preferably these steps are iterated, so the first feedstock and the second feedstock are iteratively provided. Obviously when the first feedstock is provided the second feedstock is not provided and when the second feedstock is provided the first feedstock is not provided. Optionally intermediate steps between the oxidation and reduction step may be carried out such as purging.

The term "carbon capture" as used herein refers to a process wherein a concentrated carbon dioxide ($CO_2$) stream is obtained from an industrial process. In case the $CO_2$ is transported to long term storage the process is referred to as "carbon capture and storage" (CCS), while in case the $CO_2$ is utilized as starting material in further applications the process is referred to as "carbon capture and utilization" (CCU).

The term "post-combustion $CO_2$ feedstock" as used herein refers to $CO_2$ streams obtained from industrial process from which the $CO_2$ is obtained by combustion (complete oxidation) of fossil fuels, waste or biomass. Examples of such post-combustion $CO_2$ sources are flue gasses of energy plants, waste gasses of steel or cement production and the like.

The term "pre-combustion $CO_2$ feedstock" refers to $CO_2$ feedstock obtained from processes that reform and/or partial oxidize fossil fuel, waste or biomass. These are pre-combustion processes. So "pre-combustion $CO_2$ feedstock" is feedstock obtained from a process in which fossil fuels, waste, and/or biomass are heated in the absence of oxygen or with a substoichiometric amount of oxygen. Such process converts the fossil fuels, waste, and/or biomass into syngas, so syngas is the reaction product of such process. Syngas is a mixture of mainly CO, $CO_2$ and $H_2$. Preferably pre-combustion $CO_2$ feedstock is derived from pyrolysis, partial oxidation, steam reforming, dry reforming, autothermal reforming, or gasification of fossil fuels, waste, or biomass. Pyrolysis, partial oxidation, steam reforming, dry reforming, autothermal reforming, or gasification of fossil fuels, waste, or biomass are pre-combustion processes. Typically, the pre-combustion $CO_2$ feedstock is obtained by separating the $CO_2$ from the reaction product of the precombustion process, wherein the separated $CO_2$ is the pre-combustion $CO_2$ feedstock.

The term "dry $CO_2$ feedstock" as used herein refers to the $CO_2$ feedstock without accounting for water.

The term "water gas shift (WGS) reaction" as used herein refers to the reaction of carbon monoxide and water vapour to form carbon dioxide and hydrogen: $CO + H_2O \rightleftharpoons CO_2 + H_2$ .

The term "bed material" as used herein refers to any material comprised in the reactor at any given moment during the process and includes at least a redox catalyst and optionally any inert material.

The term "inert material" as used herein refers to a material which is not a catalyst in the process of the invention and does not undergo any chemical reaction in the process of the invention. The inert material is not the redox catalyst of the invention.

*Description of the figures*

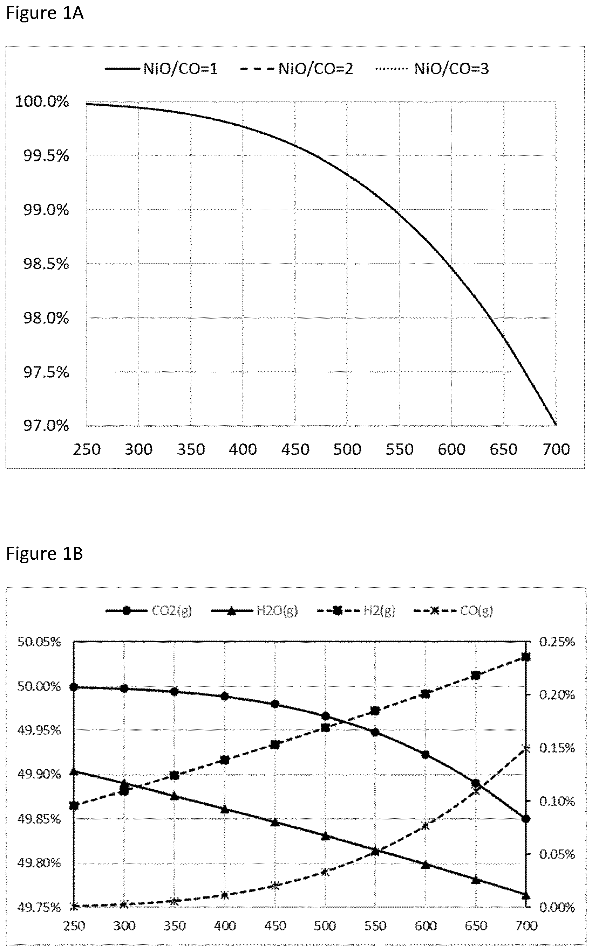

Figures 1A and 1B show the thermodynamic evaluation of the chemical looping process of the invention wherein the redox catalyst is NiO. Figure 1A shows the % CO conversion (y-axis) as a function of temperature °C (x-axis) for the redox catalyst reduction step (during which CO is oxidized) at different NiO/CO ratios = 1, 2, 3 (the lines for the different ratios are overlapping). At temperatures > 400 °C, the % CO conversion decreases with temperature for all Ni/CO ratios tested. CO conversion was found to be the highest at process temperatures up to 350 °C for all NiO/CO ratios. Figure 1B shows the equilibrium composition of the gas phase expressed as molar fraction % (y-axis) at different temperatures °C (x-axis) in the reduction step at NiO/CO=1 ($CO_2$ solid line with round symbol, $H_2O$ solid line with triangular symbol, $H_2$ dashed line with square symbol, CO dashed line with asterisk symbol). The right y-axis represents the mol.% of CO and $H_2$ (reagents of the chemical looping process) and the left y-axis represents the mol.% of $CO_2$ and $H_2O$ (products of the chemical looping process). The highest CO and $H_2$ conversion to $CO_2$ and $H_2O$ is observed up to 350 °C.

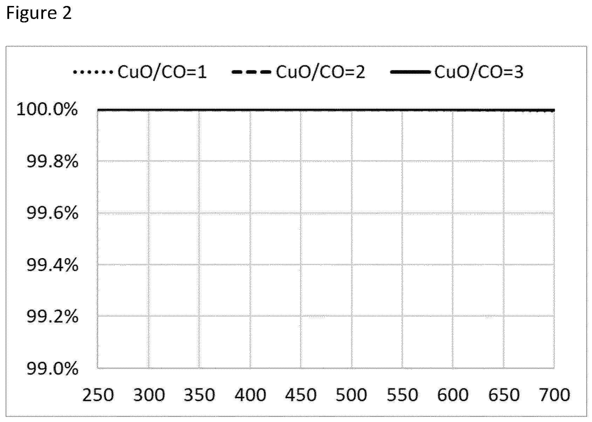

Figure 2 shows the thermodynamic evaluation of the chemical looping process of the invention wherein the redox catalyst is CuO. Figure 2 depicts the % CO conversion (y-axis) as a function of temperature °C (x-axis) at different CuO/CO molar ratios (1, 2, 3). The % of CO conversion for the CuO system does not depend on temperature and is always 100%, regardless of the process temperature.

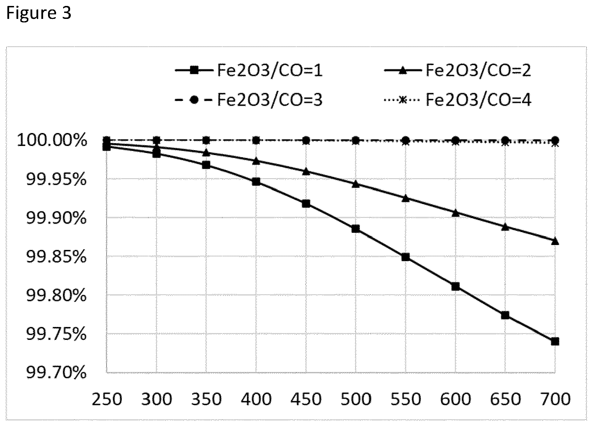

Figures 3 shows the thermodynamic evaluation of the chemical looping process of the invention wherein the redox catalyst is $Fe_2O_3$. Figure 3 shows the % CO conversion (y-axis) as a function of temperature °C (x-axis) at different $Fe_2O_3$/CO molar ratios (1, 2, 3, 4 - ratio = 1 solid line with square symbol, ratio = 2 solid line with triangular symbol, ratio = 3 dashed line with round symbol, ratio = 4 dotted line with asterisk symbol). At temperatures > 400 °C the % of CO conversion decreases for $Fe_2O_3$/CO ratios of 1 and 2. For $Fe_2O_3$/CO ratios of 1 and 2 CO conversion was found to be the highest at process temperatures up to 350 °C. For $Fe_2O_3$/CO ratios of 3 and 4, a 100% conversion for the entire temperature range is observed. Figure 3 shows that the % of CO conversion is the highest at process temperatures up to 350°C for all $Fe_2O_3$/CO ratios (1, 2, 3, and 4).

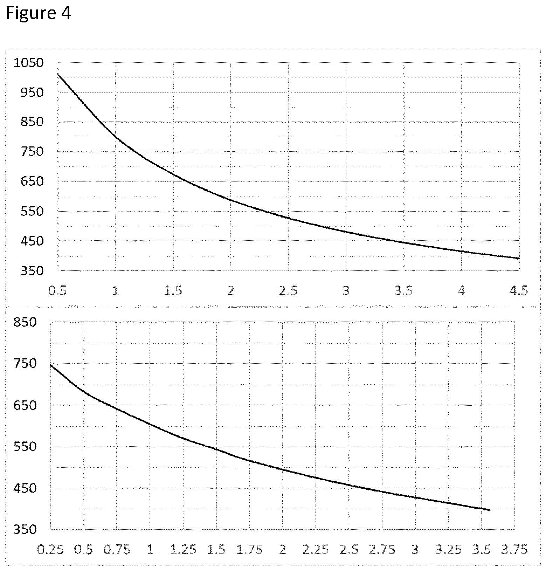

Figure 4 demonstrates the influence of two different redox catalysts on the exit temperature of the oxidation step (y-axis) for a fixed bed reactor in the first cooling strategy (feed excess gas): Cu-based system (top), Fe-based system (bottom). On the x-axis the ratio of $O_2$ to metal oxide is represented, on the y-axis the temperature of the bed material and gas exiting in °Celcius. Figure 4 gives an indication on the amount of air feed required to reach a certain outlet temperature. For a chosen outlet temperature of 400°C, an $O_2$ to redox catalyst ratio equal to 4.32 was found for the Cu-based system and 3.52 for the Fe-based system. Since the maximum outlet temperature observed for the Fe-based system is much lower than the one observed for the Cu-based system, a lower $O_2$ to redox catalyst ratio is required for the Fe-based system. In addition, the energy efficiency improves when feeding (and preheating) less air.

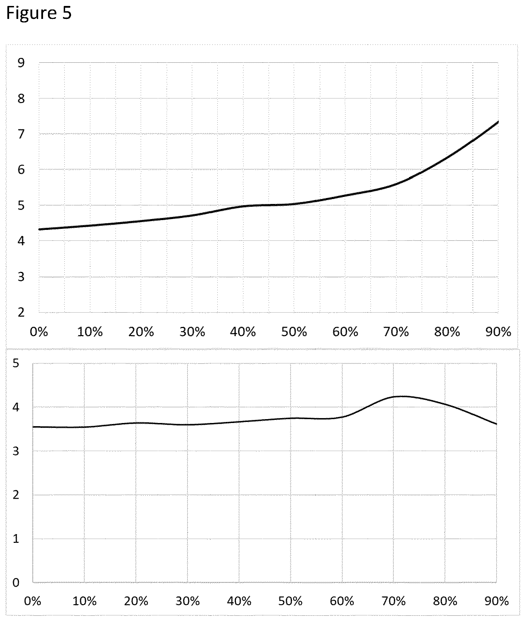

Figure 5 shows the ratio of oxygen to redox catalyst (y-axis), wherein the redox catalyst is a metal oxide as a function of the inert content (x-axis, the inert content is plotted as a percentage of the total of inert content and redox catalyst) for an exit temperature of the oxidation step of 400°C in the second cooling strategy (adding inert material): Cu-based system (top), Fe-based system (bottom). For the Cu-based system (top) the ratio of oxygen to redox catalyst increases with the increase in inert content in the bed from 4.3 (when no inert material is present) to 7.3 at an inert content of 90%. In contrast, for the Fe-based system (bottom), the presence of an inert material in the bed does not influence the ratio of oxygen to redox catalyst which remains rather constant at about 3.5.

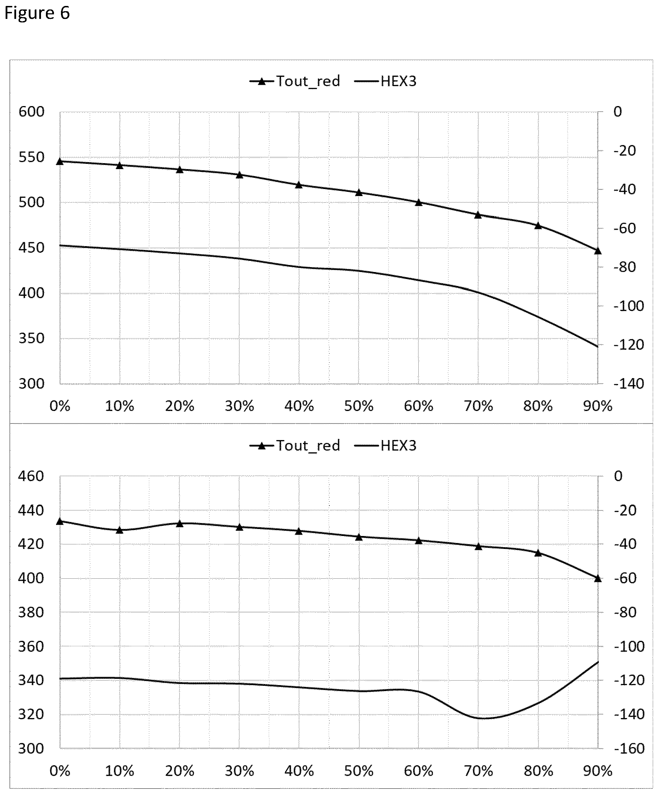

Figure 6 shows the outlet temperature of the reduction step (left y-axis, temperature in ° Celsius) and the heat duty obtained of the oxidation step (in MJ, right y-axis) wherein for the oxidation step the outlet temperature is set to 400°C and considering stoichiometric amount of $O_2/Me_xO_{Y-\delta}$ as a function of inert content (x-axis) in the bed in the third cooling strategy (removing heat from the reactor): Cu-based system (top) and Fe-based system (bottom). "Hex3" (solid line) corresponds to the heat duty removed from the reactor considering heat is removed directly from the reactor in a heat exchanger reactor design. "Tout_red" (solid line with filled triangle markers) corresponds to the outlet temperature of the reduction step. Both the outlet temperature and the heat removed are when the respective reduction and oxidation are completed.

*Process*

The process of the invention can be used to purify a $CO_2$ feedstock obtained from any carbon capture process known in the art. Purify refers to that the concentration of impurities in the $CO_2$ feedstock is reduced, or in other words that the concentration of $CO_2$ in the $CO_2$ feedstock is increased. The process of the invention purifies the $CO_2$ feedstock by oxidizing the impurities. Subsequently, the resulting oxidized impurities can be easily removed, or the oxidized impurity is $CO_2$. The process according to the invention is referred to as a chemical looping process. Chemical looping processes are well known in the art, for example it is known for the production of $CO_2$ and $H_2$ from hydrocarbons (WO2010099555A1). The chemical looping process consists at least of two main steps: a reduction step and an oxidation step. During the feeding of the $CO_2$ feedstock a redox catalyst is reduced in a reduction step, during the feeding of the oxidant the redox catalyst is oxidized in an oxidation step. Depending on process setup, reactor design, and bed type additional steps may be present. Preferred additional step involve heating and/or cooling the bed, one or more purge steps, or combination thereof. A preferred cooling step may be present after the oxidation step and/or reduction step, a preferred purge step may be present after the oxidation step and/or reduction step. Accordingly, the process of the invention comprises a reduction step, an oxidation step, and preferably additional steps before and/or after the reduction and/or oxidation steps.

Preferably the chemical looping reactor during the process of the invention is at a temperature in the range of 100 - 1200 °C, more preferably 200 - 1000 °C, even more preferably 300 - 900 °C, most preferably 400 - 800 °C. Preferably the process of the invention is carried out at a temperature in the range of 100 - 1200 °C , more preferably 200 - 1000 °C, even more preferably 300 - 900 °C, most preferably 400 - 800 °C. In a preferred embodiment, the chemical looping reactor during the process of the invention is at a temperature of above 300 °C, more preferably above 400 °C or the process of the invention is carried out at a temperature of above 300 °C, more preferably above 400 °C.

In a preferred embodiment the process of the invention is carried out at a pressure of 1 - 50 bar, more preferably 2 - 30 bar, most preferably 5 - 20 bar.

The general reactions that take place in the two chemical looping steps of the invention are reported in Zhu et al. (Chemical looping beyond combustion - a perspective - Energy & Environmental Science (RSC Publishing) DOI:10.1039/C9EE03793D). In Table 1 an example is provided wherein the redox catalyst is a metal oxide and CO, $H_2$ and $CH_4$ are exemplary impurities and $O_2$, $H_2O$ and $CO_2$ are exemplary oxidants. The process steps are further illustrated in the paragraphs below.

*Table 1. Reactions taking place in the chemical looping process.*

| Reduction | Oxidation |
|---|---|
| $Me_XO_Y + CO \rightarrow Me_XO_{Y-\delta} + CO_2$ <br> $Me_XO_Y + H_2 \rightarrow Me_XO_{Y-\delta} + H_2O$ <br> $4Me_XO_y + CH_4 \rightarrow 4Me_XO_{Y-\delta} + CO_2 + 2H_2O$ | $2Me_XO_{Y-\delta} + O_2 \rightarrow 2Me_XO_Y$ <br> $Me_XO_{Y-\delta} + H_2O \rightarrow Me_XO_Y + H_2$ <br> $Me_XO_{Y-\delta} + CO_2 \rightarrow Me_XO_Y + CO$ |

When in this document a redox catalyst or metal oxide is mentioned the oxidized form of the redox catalyst or metal oxide is referred to. In case the redox catalyst or metal oxide is reduced the redox catalyst or metal oxide is named the reduced redox catalyst or reduced metal oxide.

In addition, dependent on the impurities present other reactions may occur. For example, when sulphur S is present in the $CO_2$ feedstock, S may be oxidized to $SO_2$. If hydrocarbons of general formula $C_xH_y$ are present, they get oxidised to $CO_2$.

*Reduction step*

In the first chemical looping step which is the reduction step the redox catalyst is reduced by impurities in the $CO_2$ feedstock and the impurities in the $CO_2$ feedstock are oxidized, yielding the reduced redox catalyst and a treated $CO_2$ feedstock. In a preferred embodiment, the impurities in the $CO_2$ feedstock are one or more of CO, $H_2$, $CH_4$ and $C_xH_y$ wherein x<4, more preferably one or more of CO, $H_2$, and $CH_4$, most preferably one or more of CO and $H_2$. Preferably, in process of the invention the impurities are completely converted to $CO_2$ and $H_2O$. $H_2O$ can be separated by any means known in the art, preferably by condensing the $H_2O$ and removing the condensed $H_2O$.

Preferably the chemical looping reactor during the reduction step is at a temperature in the range of 100 - 1000 °C, more preferably 150 - 800 °C, most preferably 250 - 700 °C, or in other words preferably the reduction or the reduction step is at a temperature in the range of 100 - 1000 °C, more preferably 150 - 800 °C, most preferably 250 - 700 °C.

In a preferred embodiment the reduction or the reduction step is at a pressure of 1 - 50 bar, more preferably 2 - 30 bar, most preferably 5 - 20 bar.

*Oxidation step*

In the second chemical looping step which is the oxidation step the reduced redox catalyst is regenerated by oxidation with an oxidant, yielding the redox catalyst and a spent oxidant. Depending on the oxidant and the redox catalyst, the oxidation step can be exothermic or endothermic. Preferably, the oxidation step is exothermic. Preferably the oxidant is selected from oxygen, air, steam, $CO_2$, or combinations thereof, more preferably the oxidant is air. When steam is used as an oxidant, hydrogen is obtained in the spent oxidant as a by-product. This hydrogen can be easily retrieved from the steam and is a valuable product. When $CO_2$ is used as oxidant, the spent oxidant contains mainly CO. The spent CO may serve as a valuable feedstock for further utilization. When the oxidant is air, the spent oxidant mainly contains nitrogen and unreacted oxygen. The oxidant may be selected based on the redox catalyst chosen for the chemical looping. When the redox catalyst in the reduction step is a metal oxide selected from nickel oxide, copper oxide, or iron oxide, the preferred oxidant is air or oxygen, more preferably air. Preferably the quantity of oxidant in the oxidation step is sufficient to obtain complete oxidation of the reduced redox catalyst.

Preferably the chemical looping reactor during the oxidation step is at a temperature in the range of 100 - 1200 °C , more preferably 200 - 1000 °C, even more preferably 300 - 900 °C, most preferably 400 - 800 °C, or preferably the oxidation or the oxidation step is at a temperature in the range of 100 - 1200 °C , more preferably 200 - 1000 °C, even more preferably 300 - 900 °C, most preferably 400 - 800 °C. In a preferred embodiment, the chemical looping reactor during the oxidation step is at a temperature of above 300 °C, more preferably above 400 °C or the oxidation or the oxidation step is at a temperature of above 300 °C, more preferably above 400 °C.

In a preferred embodiment the oxidation or the oxidation step is at a pressure of 1 - 50 bar, more preferably 2 - 30 bar, most preferably 5 - 20 bar.

*Optional cooling step*

Preferably, the process comprises a cooling step after the reduction step and/or after the oxidation step, more preferably both. The cooling step after the reduction step lowers the temperature of the bed to the temperature required for the oxidation step. The cooling step after the oxidation step lowers the temperature of the bed after the second chemical looping step down to the temperature of the first chemical looping step. This is particularly useful when the reduction reaction and/or oxidation reaction are exothermic and/or when the temperature of the reduction step and oxidation step is different. The cooling step is particularly useful if the chemical loop reactor is a fixed bed reactor. Cooling may be done by any means known in the art. Preferably the cooling step is performed by:

i. providing a cooling gas to the chemical looping reactor, wherein the gas is preferably selected from nitrogen gas, air, any inert gas, or combinations thereof, more preferably the gas is air; and/or
ii. by removing heat directly from the reactor, preferably by heat exchange.

An alternative or additional way of cooling is having an inert material in the chemical looping reactor, wherein the inert material is preferably selected from $SiO_2$, $Al_2O_3$, or combinations thereof, more preferably the inert material is $Al_2O_3$. The inert material acts as heat sink that takes up the heat in the oxidation step and dissipates this heat in the reduction step, by providing this heat to an endothermic reduction reaction and/or transferring the heat to the $CO_2$ feedstock, therewith heating the $CO_2$ feedstock. In a preferred embodiment the chemical looping reactor comprises an inert material, wherein the inert material is preferably selected from $SiO_2$, $Al_2O_3$, or combinations thereof, more preferably the inert material is $Al_2O_3$. Preferably the inert material is a particulate material. Preferably the chemical looping reactor comprises a mixture of an inert material and a redox catalyst.

The hot outlet streams from the cooling step are preferably used to heat up water, thus creating steam while they cool down. Thus, preferably the cooling step generates steam, which can be advantageously re-used, for example in the process to obtain the $CO_2$ feedstock. For example, if the $CO_2$ feedstock is obtained from WGS treated syngas, the steam generated in the cooling step may be recycled as feedstock steam in the WGS reaction. Hence, preferably the steam generated in the cooling step is used in the process to obtain the $CO_2$ feedstock. More preferably the $CO_2$ feedstock is obtained from WGS-treated syngas and the steam generated in the cooling step is recycled as feedstock in the WGS treatment. The amount of steam generated can be related to the amount of inlet carbon in a steam to inlet carbon ratio ($S/C_{(CO+CO2)}$). The amount of inlet carbon $C_{(CO+CO2)}$ is the sum of CO and $CO_2$ present in the inlet stream expressed in mol/s. In a preferred embodiment the cooling step generate an amount of steam that provides for a steam to inlet carbon ratio of at least 0.5, more preferably at least 0.7, most preferably at least 0.9 expressed as $S/C_{(CO+CO2)}$ ratio.

*Optional purge step*

Preferably the process comprises a purge step after the reduction step and/or a purge step after the oxidation step, more preferably both. In a purge step a purge gas is provided to the chemical looping reactor. Preferably the purge gas is steam, $CO_2$, or a combination thereof. Preferably the pressure of the purge gas equals the pressure of the $CO_2$ feedstock. The amount of purge gas needed depends on the amount of bed material. Bed material refers to the material in the reactor at any given moment during the process and includes the redox catalyst and any inert material. Preferably the amount of purge gas is $1 - 15 \cdot 10^{-6}$ kmol per kg of bed material, more preferably $2 - 8 \cdot 10^{-6}$ kmol per kg of bed material, most preferably $3 - 5 \cdot 10^{-6}$ kmol per kg of bed material. Advantageously it was found that both for copper oxide and iron oxide based bed material a relative small amount of purge gas (around $3.5 - 4.5 \cdot 10^{-6}$ kmol per kg of bed material) is required for purging the bed.

*Redox catalyst*

The choice of redox catalyst influences the thermodynamics of the chemical looping process. The redox catalyst is sequentially reduced and oxidized in the chemical looping process. This process involves the redox pair redox catalyst / reduced redox catalyst, preferably the redox pair is metal oxide / reduced metal oxide or $Me_XO_Y/Me_XO_{Y-\delta}$. Preferably the redox catalyst is selected such that the oxidation step and/or the reduction step is exothermic. More preferably, the redox catalyst is selected such that both the oxidation step and the reduction step are exothermic. Preferably the redox catalyst is selected such that full conversion of CO, $H_2$, and/or $CH_4$ to $CO_2$ and/or $H_2O$ is achieved. When a specific redox catalyst or metal oxide is mentioned, the oxidized form of the redox catalyst or metal oxide is mentioned.

Nickel oxide (redox pair NiO/Ni) was found to be a suitable redox catalyst for the chemical looping process of the invention. However, CO oxidation to $CO_2$ with nickel oxide is limited by equilibrium (Example 1). Copper oxide and iron oxide (redox pairs $CuO/Cu_2O$ and $Fe_2O_3/Fe_3O_4$) were found to be more advantageous redox catalysts, because full conversion of CO to $CO_2$ is thermodynamically feasible. Iron oxide is particularly preferred because it ensures a that a higher amount of steam is generated during the cooling process compared to when copper oxide is used (Example 2). The higher amount of steam can be advantageously recycled in the upstream process to obtain the $CO_2$ feedstock, for example in the WGS reaction. Also for other processes steam is a valuable and useful product.

Thus, preferably the redox catalyst is a metal oxide, preferably selected from the list consisting of iron oxide, copper oxide, nickel oxide, manganese oxide, cobalt oxide and any combination thereof, more preferably the metal oxide is selected from the list consisting of nickel oxide, iron oxide, copper oxide, and any combination thereof, even more preferably the metal oxide is selected from the list consisting of copper oxide and iron oxide, and combinations thereof, most preferably the metal oxide is iron oxide. Preferably the redox catalyst is selected from CuO, $Fe_2O_3$, and combinations thereof, most preferably the redox catalyst is $Fe_2O_3$.

The chemical looping reactor comprises a redox catalyst and optionally an inert solid. In a preferred embodiment, the chemical looping reactor comprises an inert solid, more preferably a particulate inert solid. Preferably the inert solid is selected from silica ($SiO_2$), alumina ($Al_2O_3$), or combinations thereof, more preferably $Al_2O_3$. Preferably the bed material in the chemical looping reactor during the reduction step comprises 0 - 90 wt.% inert material, more preferably 10 - 50 wt.% based on total weight of the bed material. In an alternative preferred embodiment, the chemical looping reactor does not comprise any inert solid. The inventors found that when copper oxide is used as redox catalyst, inert material may be needed to prevent sintering and agglomeration at high temperatures. When the redox catalyst is iron oxide no inert material is required to increase stability of the bed, which allows for a smaller reactor than when inert material is present.

*Feedstock*

The process of the invention can be used to purify $CO_2$ streams obtained from any process known in the art. The $CO_2$ feedstock typically is obtained from carbon capture technology. Preferably the $CO_2$ feedstock is a pre-combustion $CO_2$ feedstock, a post-combustion $CO_2$ feedstock or combinations thereof. Examples of pre-combustion $CO_2$ feedstocks are $CO_2$ feedstocks derived from pyrolysis of fossil fuels, waste, or biomass, optionally coupled with physical $CO_2$ separation technologies like Selexol and Rectisol. Examples of post-combustion $CO_2$ feedstocks are $CO_2$ feedstocks derived from the combustion of fossil fuels, waste, or biomass to generate energy, or cement/coke/lime production. Preferably the $CO_2$ feedstock is a pre-combustion $CO_2$ feedstock. More preferably, the $CO_2$ feedstock is obtained from pyrolysis, partial oxidation, steam reforming, dry reforming, autothermal reforming, or gasification of biomass, waste and/or fossil fuel wherein preferably the $CO_2$ feedstock is separated from the pyrolysis, partial oxidation, steam reforming, dry reforming, autothermal reforming, or gasification product.

In a preferred embodiment the $CO_2$ feedstock is obtained from syngas, even more preferably from water-gas shift (WGS)-treated syngas, most preferably from WGS-treated syngas obtained by a sorption enhanced WGS (SEWGS) process. Syngas is a precombustion $CO_2$ feedstock. The SEWGS process already provides high purity $CO_2$. Nevertheless, small amounts of $H_2$ and CO may remain, if the SEGWS process is not run at its optimal conditions, for example due to overall process efficiency considerations. Therefore, the chemical looping process of the invention may improve SEGWS process efficiency.

Typically, the $CO_2$ content of the $CO_2$ feedstock is high. The $CO_2$ feedstock comprises more than 80 mol% $CO_2$ on total of the dry $CO_2$ feedstock, preferably more than 90 mol%, even more preferably more than 95 mol%, most preferably more than 99 mol%. Preferably the $CO_2$ feedstock comprises in the range of 10 - 80 mol% $CO_2$ on total of the $CO_2$ feedstock, more preferably in the range of 20 - 70 mol% $CO_2$ on total of the $CO_2$ feedstock, most preferably in the range of 30 - 60 mol% $CO_2$ on total of the $CO_2$ feedstock.

The $CO_2$ feedstock comprises impurities. Preferably, the total amount of impurities is less than 20 mol% based on total of the dry $CO_2$ feedstock, more preferably less than 10 mol% based on total of the dry $CO_2$ feedstock, most preferably less than 5 mol% based on total of the dry $CO_2$ feedstock. Preferably, the total amount of impurities is in the range of 0.00001 to 20 mol% based on total of the dry $CO_2$ feedstock, more preferably in the range of 0.001 to 5 mol% based on total of the dry $CO_2$ feedstock, even more preferably in the range of 0.01 to 5 mol% based on total of the dry $CO_2$ feedstock, most preferably in the range of 0.1 to 5 mol% on total of the dry $CO_2$ feedstock. Preferably the $CO_2$ feedstock comprises an amount of $CH_4$ less than 1 mol%, more preferably less than 0.5 mol%, most preferably less than 0.3 mol% based on total of the dry $CO_2$ feedstock. Preferably the $CO_2$ feedstock comprises an amount of $CH_4$ in the range of 0.00001 to 1 mol%, more preferably 0.001 to 0.5 mol%, most preferably 0.01 to 0.3 mol% based on total of the dry $CO_2$ feedstock. Preferably the $CO_2$ feedstock comprises an amount of $H_2$ less than 10 mol%, more preferably less than 8 mol%, most preferably less than 6 mol% based on total of the dry $CO_2$ feedstock. Preferably the $CO_2$ feedstock comprises an amount of $H_2$ in the range of 0.00001 to 10 mol%, more preferably 0.001 to 8 mol%, most preferably 0.1 to 6 mol% based on total of the dry $CO_2$

feedstock. Preferably the $CO_2$ feedstock comprises an amount of CO less than 2 mol%, more preferably less than 1 mol%, most preferably less than 0.5 mol% based on total of the dry $CO_2$ feedstock. Preferably the $CO_2$ feedstock comprises an amount of CO in the range of 0.00001 to 2 mol%, more preferably 0.001 to 1 mol%, most preferably 0.1 to 0.5 mol% based on total of the dry $CO_2$ feedstock. The $CO_2$ feedstock comprises an amount of $CO_2$ of at least 90 mol%, preferably at least 95 mol%, most preferably at least 99 mol% based on total of the dry $CO_2$ feedstock.

In another preferred embodiment the total amount of impurities is in the range of 0.01 - 10 mol% based on total of the dry $CO_2$ feedstock, more preferably in the range of 0.05 - 7 mol% based on total of the dry $CO_2$ feedstock, most preferably in the range of 0.1 - 5 mol% based on total of the dry $CO_2$ feedstock. Preferably the $CO_2$ feedstock comprises an amount of $CH_4$ in the range of 0.01 - 1 mol%, more preferably 0.05 - 0.5 mol%, most preferably 0.1 - 0.3 mol% based on total of the dry $CO_2$ feedstock. Preferably the $CO_2$ feedstock comprises an amount of $H_2$ in the range of 0.1 - 10 mol%, more preferably 1-8 mol%, most preferably 2-6 mol% based on total of the dry $CO_2$ feedstock. Preferably the $CO_2$ feedstock comprises an amount of CO in the range of 0.01 - 2 mol%, more preferably 0.05 - 1 mol%, most preferably 0.1 - 0.5 mol% based on total of the dry $CO_2$ feedstock.

In a preferred embodiment, the $CO_2$ feedstock comprises an amount of $H_2O$ of 1 - 80 mol%, more preferably 20 - 70 mol%, most preferably 40 - 60 mol% $H_2O$ based on total of the $CO_2$ feedstock. Preferably the $CO_2$ feedstock comprises an amount of $CH_4$ in the range of 0.00001 - 0.7 mol%, more preferably 0.001 - 0.2 mol%, most preferably 0.01 - 0.15 mol% based on total of the $CO_2$ feedstock. Preferably the $CO_2$ feedstock comprises an amount of $H_2$ in the range of 0.00001 - 10 mol%, more preferably 0.001 - 6 mol%, most preferably 0.1 - 4 mol% based on total of the $CO_2$ feedstock. Preferably the $CO_2$ feedstock comprises an amount of CO in the range of 0.00001 - 1 mol%, more preferably 0.001 - 0.5 mol%, most preferably 0.05 - 0.3 mol% based on total of the $CO_2$ feedstock. Preferably the $CO_2$ feedstock comprises an amount of $CO_2$ in the range of 10 - 99 mol%, more preferably 20 - 90 mol% most preferably 30 - 60 mol% based on total of the $CO_2$ feedstock. In an alternative preferred embodiment, the $CO_2$ feedstock does not comprise any $H_2O$. In this embodiment, preferably the $CO_2$ feedstock contains $H_2O$ in an amount of less than 5 mol%, more preferably less than 2 mol%, most preferably less than 1 mol% based on total of the $CO_2$ feedstock.

Preferably the $CO_2$ feedstock is obtained from syngas or from WGS treated syngas by separating the $CO_2$ feedstock from the syngas or from the WGS treated syngas, preferably wherein the syngas comprises on total of the dry syngas in the range of 10 - 70 mol % $H_2$, 5 - 20 mol % $CO_2$ and 20 - 70 mol % CO or wherein the WGS treated syngas comprises on total of the WGS treated syngas in the range of 20 - 90 mol % $H_2$, 20 - 75 mol % $CO_2$ and 0-10 mol % CO.

Typically, a pre-combustion feedstock does not comprise $O_2$, whilst typically a post-combustion feedstock comprises $O_2$. The presence of oxygen is disadvantageous in the process for the oxidation of impurities in a $CO_2$ feedstock as the $O_2$ may carry over to the treated $CO_2$ feedstock. $O_2$ in the treated $CO_2$ feedstock is not desirable as it may affect the further processing of the treated $CO_2$ feedstock in a negative way or violate $CO_2$ purity specifications. In the process for the oxidation of impurities in a $CO_2$ feedstock, $O_2$ is likely to react with the impurities instead of the redox catalyst but will not result in 100% conversion. In a preferred embodiment the $CO_2$ feedstock comprises less than 0.1 mol% $O_2$ based on total of the dry feedstock, even more preferably less than 0.01 mol% $O_2$, most preferably the $CO_2$ feedstock does not comprise $O_2$.

*Process setup*

The process of the invention can be carried out in any reactor known in the art. Suitable reactors include but are not limited to fixed bed reactor, fluidised bed reactor, moving bed reactor. Preferably the chemical looping reactor is a fixed bed reactor or a fluidized bed reactor.

In one embodiment, the process of the invention comprises the following sequential steps:

a. a reduction step wherein the $CO_2$ feedstock is provided to a chemical looping reactor, the redox catalyst is reduced, and impurities in the $CO_2$ feedstock are oxidized to yield a treated $CO_2$ feedstock; and
b. optionally a first cooling step, wherein the temperature of the chemical looping reactor is lowered; and
c. optionally a first purge step wherein a first purge gas is provided to the chemical looping reactor and the treated $CO_2$ feedstock is purged from the reactor; and
d. an oxidation step wherein an oxidant is provided to the chemical looping reactor, the reduced redox catalyst is oxidized, and the oxidant is reduced to yield a spent oxidant; and
e. optionally a second cooling step wherein the temperature of the chemical looping reactor is lowered; and
f. optionally a second purge step wherein a second purge gas is provided to the chemical looping reactor and the spent oxidant is purged from the reactor,

wherein steps (b) and (c) may be performed in any order, wherein steps (e) and (f) may be performed in any order. Considering chemical looping is a cyclic process, preferably the sequence of steps is repeated after the last step.

In a preferred embodiment, the process of the invention involves an upstream process to obtain the $CO_2$

feedstock prior to the chemical looping. Therefore, preferably the process of the invention involves the following sequential steps:

I. A process to obtain a $CO_2$ feedstock; and

II. The process for the oxidation of impurities in a $CO_2$ feedstock as described above to oxidize the impurities in the $CO_2$ feedstock obtained in step (I) to obtain a treated $CO_2$ feedstock, wherein the $CO_2$ feedstock comprises more than 80 mol% $CO_2$ on total of the dry $CO_2$ feedstock, wherein the $CO_2$ feedstock and an oxidant are sequentially provided to a chemical looping reactor comprising a redox catalyst, and wherein the impurities in the $CO_2$ feedstock are oxidized when the $CO_2$ feedstock is provided to the chemical looping reactor, wherein preferably the impurities in the $CO_2$ feedstock are one or more of CO, $CH_4$, and $H_2$, more preferably one or more of CO and $H_2$, and are oxidized to $CO_2$ and $H_2O$; and

III. Optional separation of $H_2O$ from the treated $CO_2$ feedstock by condensation.

Preferably the upstream process to obtain the $CO_2$ feedstock is selected from pyrolysis, partial oxidation, steam reforming, dry reforming, autothermal reforming, or gasification of biomass, waste, and/or fossil fuel, wherein the $CO_2$ feedstock is separated from the pyrolysis, partial oxidation, steam reforming, dry reforming, autothermal reforming, or gasification product, wherein preferably the pyrolysis, partial oxidation, steam reforming, dry reforming, autothermal reforming, or gasification product is subjected to a water-gas-shift (WGS) step before the $CO_2$ feedstock is separated from the pyrolysis, partial oxidation, steam reforming, dry reforming, autothermal reforming, or gasification product, wherein more preferably the pyrolysis, partial oxidation, steam reforming, dry reforming, autothermal reforming, or gasification product is subjected to a sorption-enhanced water-gas-shift (SEWGS) step by which the $CO_2$ feedstock is separated from the pyrolysis, partial oxidation, steam reforming, dry reforming, autothermal reforming, or gasification product. An example of a suitable SEWGS process is disclosed in WO 2022/053692.

Preferably the process of the invention comprises the following sequential steps:

I. A process to obtain a $CO_2$ feedstock, wherein the process is selected from pyrolysis, partial oxidation, steam reforming, dry reforming, autothermal reforming, or gasification of biomass, waste and/or fossil fuel wherein the $CO_2$ feedstock is separated from the pyrolysis, partial oxidation, steam reforming, dry reforming, autothermal reforming, or gasification product, wherein preferably the pyrolysis, partial oxidation, steam reforming, dry reforming, autothermal reforming, or gasification product is subjected to a water-gas-shift (WGS) step before the $CO_2$ feedstock is separated from the pyrolysis, partial oxidation, steam reforming, dry reforming, autothermal reforming, or gasification product, wherein more preferably the pyrolysis, partial oxidation, steam reforming, dry reforming, autothermal reforming, or gasification product is subjected to a sorption-enhanced water-gas-shift (SEWGS) step by which the $CO_2$ feedstock is separated from the pyrolysis, partial oxidation, steam reforming, dry reforming, autothermal reforming, or gasification product; and

II. A chemical looping process to oxidize the impurities in the $CO_2$ feedstock obtained in step (I) to obtain a treated $CO_2$ feedstock, wherein preferably the impurities in the $CO_2$ feedstock comprise one or more of CO, $CH_4$, and $H_2$, more preferably one or more of CO and $H_2$, and are oxidized to $CO_2$ and $H_2O$, wherein the chemical looping process comprises the following sequential steps:

a. a reduction step wherein the $CO_2$ feedstock is provided to a chemical looping reactor comprising a redox catalyst, the redox catalyst is reduced, and impurities in the $CO_2$ feedstock are oxidized to yield a treated $CO_2$ feedstock, and

b. optionally a first cooling step, wherein the temperature of the chemical looping reactor is lowered; and

c. optionally a first purge step wherein a first purge gas is provided to the chemical looping reactor and the treated $CO_2$ feedstock is purged from the reactor, and

d. an oxidation step wherein an oxidant is provided to the chemical looping reactor, the reduced redox catalyst is oxidized, and the oxidant is reduced to yield a spent oxidant, and

e. optionally a second cooling step wherein the temperature of the chemical looping reactor is lowered, and

f. optionally a second purge step wherein a second purge gas is provided to the chemical looping reactor and the spent oxidant is purged from the reactor

wherein steps (b) and (c) may be performed in any order, wherein steps (e) and (f) may be performed in any order; and

III. Optionally separation of $H_2O$ from the treated $CO_2$ feedstock by condensation.

In a most preferred embodiment, the process of the invention comprises the following sequential steps:

I. A sorption-enhanced water-gas shift (SEWGS) process for the formation of a $CO_2$ feedstock and an $H_2$ stream,

comprising:

a. a reaction step, wherein a feed gas comprising $CO_x$, wherein x = 1 - 2, and $H_2O$ is fed into a SEWGS reactor containing a catalyst and sorbent material capable of adsorbing $CO_2$, thereby forming the $H_2$ stream and a sorbent material loaded with $CO_2$, and
b. optionally a rinse step, wherein steam is fed to the SEWGS reactor, thereby establishing a pressure in the range of 5 - 50 bar, and
c. optionally a pre-blowdown step, wherein the pressure in the SEWGS reactor is reduced to establish a blowdown pressure in the range of 0.5 - 1.5 times the partial pressure of CO and $CO_2$ in the feed gas of step (a), and
d. a blowdown step, wherein the pressure in the SEWGS reactor is reduced to the regeneration pressure in the range of 1 - 5 bar, thereby releasing at least part of the $CO_2$ from the loaded sorbent material, thereby forming the $CO_2$ feedstock; and
e. a purge step, wherein steam is fed to the SEWGS reactor, thereby releasing further $CO_2$ feedstock from the SEWGS reactor,

wherein the off gas released from the reactor during step (c) is collected separately from the $CO_2$ released from the reactor during step (d); and
II. the chemical looping process of the current invention to oxidize the impurities in the $CO_2$ feedstock obtained in step (I) to obtain a treated $CO_2$ feedstock, wherein preferably the impurities in the $CO_2$ feedstock are one or more of CO, $CH_4$, and $H_2$, more preferably one or more of CO and $H_2$, and are oxidized to $CO_2$ and/or $H_2O$, wherein the chemical looping process comprises the following sequential steps:

a. a reduction step wherein the $CO_2$ feedstock is provided to a chemical looping reactor comprising a redox catalyst, the redox catalyst is reduced, and impurities in the $CO_2$ feedstock are oxidized to yield a treated $CO_2$ feedstock, and
b. optionally a first cooling step, wherein the temperature of the chemical looping reactor is lowered; and
c. optionally a first purge step wherein a first purge gas is provided to the chemical looping reactor and the treated $CO_2$ feedstock is purged from the reactor,
d. an oxidation step wherein an oxidant is provided to the chemical looping reactor, the reduced redox catalyst is oxidized, and the oxidant is reduced to yield a spent oxidant,
e. optionally a second cooling step wherein the temperature of the chemical looping reactor is lowered, and
f. optionally a second purge step wherein a second purge gas is provided to the chemical looping reactor and the spent oxidant is purged from the reactor
wherein steps (b) and (c) may be performed in any order, wherein steps (e) and (f) may be performed in any order; and

III. Optionally separation of $H_2O$ from the treated $CO_2$ feedstock by condensation.

**Examples**

Example 1: thermodynamic evaluation of the process with Ni-, Cu- and Fe- oxides systems

In this example, the thermodynamics of the process of the invention were evaluated for three different redox catalyst: Nickel, Copper, and Iron oxides.

*Method*

Thermodynamic evaluation of metal oxides based on Ni, Fe and Cu for CO oxidation to $CO_2$ was carried out using HSC Chemistry v5.11 software. The assumed $CO_2$ feedstock for the chemical looping reduction step is reported in Table 2.

*Table 2. Assumed $CO_2$ feedstock for the reduction step.*

| Component | Mol% |
|-----------|------|
| CO | 5 |
| $CO_2$ | 45 |
| $H_2O$ | 50 |

(continued)

| Component | Mol% |
|-----------|------|
| $H_2$ | 0 |

*Results*

Starting from the most oxidized form of Ni-based oxygen carrier (i.e., NiO), CO oxidation to $CO_2$ was investigated thermodynamically at three different NiO/CO molar ratios (i.e., 1-3). As represented in Figure 1A, the conversion of CO decreases with temperature from 100% at 250°C to 97% at 700°C, irrespective of the NiO/CO ratio.

Looking at the outlet gas phase composition illustrated in Figure 1B it can be noted that $CO_2$ and $H_2O$ are slightly decreasing with temperature while $H_2$ and CO are slightly increasing. This indicates that some side reaction(s) may take place in the evaluated temperature range. If we consider only the species participating in the reaction: $NiO + CO_{(g)} = Ni + CO_{2(g)}$, as reported in Table 3, without taking into account any $H_2$ and $H_2O$, at NiO/CO=1 the observed CO conversion seems to be lower than in the case where $H_2$ and $H_2O$ are also included as components (not shown). Considering excess NiO in the reactor bed, the conversion of CO has the same values and trend as the case where $H_2$ and $H_2O$ are included as components (Figure 1A), indicating that the reduction of NiO with CO is equilibrium-limited.

*Table 3 Simplified inlet composition in the reduction step in case of Ni-based material*

|       | Component | Mol% |
|-------|-----------|------|
| Gas   | CO | 5 |
|       | $CO_2$ | 95 |
| Solid | NiO | 100 |

Starting from the most oxidized form of Cu-based oxygen carrier (i.e., CuO), CO oxidation to $CO_2$ was investigated thermodynamically at three different CuO/CO molar ratios (i.e., 1-3). Full oxidation of CO to $CO_2$ is thermodynamically feasible in the evaluated temperature range for all cases as seen from Figure 2.

Starting from the most oxidized form of Fe-based oxygen carrier (i.e., $Fe_2O_3$), CO oxidation to $CO_2$ was investigated thermodynamically at different $Fe_2O_3$/CO molar ratios. Full oxidation of CO to $CO_2$ is thermodynamically feasible in the evaluated temperature range for $Fe_2O_3/CO \geq 3$ (e.g., $3 Fe_2O_3 + CO = 2 Fe_3O_4 + CO_2$) as it can be seen in Figure 3. At $Fe_2O_3/CO < 3$ (e.g., $Fe_2O_3 + CO = 2 FeO + CO_2$), hydrogen starts to form as well, slightly lowering the conversion of CO but still remaining well above 99.5%. In case of nickel the operating temperature should be kept below 450°C to maintain similar CO conversions which would be challenging given the exothermic nature of the process.

At $Fe_2O_3$/CO molar ratios of 1/3 (e.g. $Fe_2O_3 + 3 CO = 2 Fe + 3 CO_2$) the CO conversion decreases significantly with increasing temperature. Analysing gas phase composition at the outlet of the reduction step, it can be observed that both CO and $H_2O$ are increasing while $CO_2$ and $H_2$ are decreasing. This could indicate that the reverse water-gas-shift reaction ($CO_2 + H_2 = CO + H_2O$) occurs.

*Conclusion*

Copper and iron oxides are able to fully oxidize CO to $CO_2$ in the temperature range 250-700°C, while in the case of the nickel oxide CO conversion is limited by equilibrium, decreasing with increasing temperature from 100% at 250°C to 97% at 700°C. The process of the invention is feasible with all redox catalyst tested. However, CuO and $Fe_2O_3$ are more advantageous than NiO, since full oxidation of CO to $CO_2$ is thermodynamically feasible.

Example 2: evaluation of possible cooling strategies

In this example, a fixed bed configuration with the operating temperature of the first chemical looping step (i.e., reduction) of 400°C is considered. Given the high outlet temperatures at the outlet of the second chemical looping step (i.e., oxidation), different cooling strategies were proposed to return the bed to the temperature of the first chemical looping step (400°C), such as:

    i. Feed excess air,
    ii. Have an inert solid material in the bed to limit the temperature increase then feed excess air to further cool down the bed, or

iii. Remove heat from the oxidation reactor - heat exchanger reactor design.

This presents also a great opportunity for employing heat recovery at the outlet of the oxidation step. The steam generated can be integrated into the upstream capture process lowering the energy demand. Therefore, the higher amount of steam generate is advantageous.

*Method*

A material balance was calculated in Microsoft Excel and used as input in HSC Chemistry v5.11-"Heat and Material Balance" section. Outlet temperature of the chemical looping steps was calculated in this section assuming adiabatic process (Heat balance=0). Heat recovery in the form of steam was evaluated in the case the bed material contains only redox catalyst or it is mixed with an inert material (i.e. $Al_2O_3$). Steam is generated by a heat exchanger wherein the outlet host streams are used to heat up water. To make sure there is enough oxygen carrier to completely oxidize CO but on the other hand to limit the material consumption, a $Me_XO_Y$/CO molar ratio equal to 3 was selected for the Cu-based system, and $Me_XO_Y$/CO = 4 for the Fe-based. Different rations of $Me_XO_Y$ and $Al_2O_3$ are evaluated. Generation of medium pressure (MP) steam with the specifications reported in Table 1 was evaluated.

The theoretical maximum of steam that can be generated by recovering heat from the chemical looping process was evaluated using Equation (1), considering an efficiency of 80% for the waste heat recovery boiler (WHRB) and an inlet water temperature of 20°C.

$$WHRB_{capacity}\,[\text{kg}] = \frac{\text{usable heat}}{\text{heat required per kg of steam}} = \frac{(\text{HEX}i) * \text{efficiency\%}}{h_4 - h_1} \quad Eq(1)$$

*Results*

Figure 4 illustrates the influence of the $O_2$/$Me_XO_{Y-1}$ ratio on the outlet temperature of the oxidation step for the previously fixed $Me_XO_Y$/CO ratios. This gives an assessment of the first cooling strategy: i. feed excess air. The amount of steam generated in this case is reported in Table 4. This includes also the steam generated by recovering heat from the outlet of the reduction step.

*Table 4. Theoretical amount of steam generated in the first cooling strategy.*

|  | kg/h steam at T=390°C and P = 12 bar | kg/h steam at T=390°C and P = 25 bar |
|---|---|---|
|  |  |  |
| $CuO/Cu_2O$ | 79.95 | 80.51 |
| $Fe_2O_3/Fe_3O_4$ | 85.34 | 85.95 |

As a next step, the second cooling strategy was evaluated: ii. Adding an inert solid material in the bed to limit the temperature increase then feed excess air to further cool down the bed. Figure 5 illustrates the $O_2$/$Me_XO_{Y-\delta}$ required to cool the bed to 400°C (i.e., temperature of the first looping step) as a function of the inert content in the bed. The amount of steam generated in this case is reported in Table 5. This includes also the steam generated by recovering heat from the outlet of the reduction step.

*Table 5. Average theoretical amount of steam generated in the second cooling strategy.*

|  | kg/h steam at T=390°C and P = 12 bar | kg/h steam at T=390°C and P = 25 bar |
|---|---|---|
| $CuO/Cu_2O$ | 81.91 | 82.49 |
| $Fe_2O_3/Fe_3O_4$ | 86.79 | 87.41 |

The last cooling strategy consists of removing heat directly from the reactor. Figure 6 shows the temperature profile of the reduction step as a function of the inert content as well as the heat duty removed from the oxidation reactor by setting the outlet temperature of the oxidation step to 400°C and considering stoichiometric amount of $O_2$/$Me_XO_{Y-\delta}$. The amount of steam generated in this case is reported in Table 6. This includes also the steam generated by recovering the heat from the outlet of the two chemical looping steps.

*Table 6. Average theoretical amount of steam generated in the third cooling strategy.*

|  | Kg/h steam at T=390°C and P = 12 bar | kg/h steam at T=390°C and P = 25 bar |
|---|---|---|
| $CuO/Cu_2O$ | 72.64 | 73.15 |
| $Fe_2O_3/Fe_3O_4$ | 72.83 | 73.35 |

*Discussion and conclusion*

In the first cooling strategy, i.e. feed excess air, the $O_2/Me_XO_{Y-\delta}$ ratio required to get the temperature of oxidation step down to the inlet temperature of the reduction step (i.e. 400°C) is equal to 4.32 for the Cu-based system and 3.52 for the Fe-based system. A lower $O_2/Me_XO_{Y-\delta}$ is required for the Fe-based system since the maximum outlet temperature is much lower than the one observed for the Cu-based system. The energy efficiency improves when feeding less air, thus Fe-based system is more energy efficient that the Cu-based system. The amount of steam generated in this case, translated into steam to inlet carbon ratio ($S/C_{(CO+CO2)}$), amounts to an average value of S/C=0.89 for the Cu-based system and 0.95 for the Fe-based system.

In the second cooling strategy, i.e. adding an inert solid material in the bed to limit the temperature increase then feed excess air to further cool down the bed, for the Cu-based system the $O_2/Me_XO_{Y-\delta}$ seems to increase with the increase in inert content in the bed from 4.3 to 7.3 at an inert content of 90%. On the other hand, for the Fe-based system, the presence of an inert material in the bed does not influence the $O_2/Me_XO_{Y-\delta}$ ratio which remains rather constant at 3.5. The amount of steam generated in this case translates into a S/C=0.91 for the Cu-based system and 0.97 for the Fe-based system.

A main drawback of Cu-based systems is the low melting point of Cu (i.e., 1079°C), which requires the process to be operated at lower temperatures (e.g., 800-850°C) to avoid agglomeration of the particles. This means that for the Cu-based system an inert content of at least 30% is needs to provide structural stability and avoid sintering at stoichiometric $O_2/Me_XO_{Y-1}$ (see Figure 5).

In case of the last cooling strategy, i.e. removing heat directly from the reactor, the amount of steam generated in this case corresponds to an average S/C=0.81 for both the Cu-based system and the Fe-bases system. In this case the amount of steam generated is the same even if there is a higher energy recovery potential in the Fe-based system as seen from Figure 6. The final value is balanced out by the extra steam generated at the outlet of the reduction step in the Cu-based system which has a higher outlet temperature. One drawback of this cooling strategy is that it will lead to a more complex reactor design.

The results on the cooling strategies are obtained at the chosen process temperatures. The same trend of results is expected when the process is run at a different temperature. Taken together these results show that the Fe-based system has some significant advantages over the Cu-based system in terms of energy recovery potential. With the Fe-based system more steam is generated in all of the cooling strategy, which leads to availability of steam to be recycled in the upstream carbon capture process. Furthermore, the Fe-based system was found to be more stable than the Cu-based system, since the latter requires the presence of an inert material in order to avoid sintering and agglomeration at high temperatures. Fe-based systems have the additional advantages of being more environmentally friendly and less expensive than Cu-based systems.

**Claims**

1. Process for the oxidation of impurities in a $CO_2$ feedstock comprising impurities, wherein the $CO_2$ feedstock comprises more than 80 mol% $CO_2$ on total of the dry $CO_2$ feedstock, wherein the $CO_2$ feedstock and an oxidant are sequentially provided to a chemical looping reactor comprising a redox catalyst, and wherein the impurities in the $CO_2$ feedstock are oxidized when the $CO_2$ feedstock is provided to the chemical looping reactor.

2. Process according to claim 1, wherein the redox catalyst is a metal oxide, preferably selected from the list consisting of iron oxide, copper oxide, nickel oxide, manganese oxide, cobalt oxide, and any combination thereof.

3. Process according to claim 1 or 2, wherein the redox catalyst is selected from the list consisting of iron oxide, copper oxide, and combinations thereof.

4. Process according to any one of the preceding claims, wherein the $CO_2$ feedstock is a pre-combustion $CO_2$ feedstock.

5. Process according to any one of the preceding claims, wherein the $CO_2$ feedstock is obtained from pyrolysis, partial oxidation, steam reforming, dry reforming, autothermal reforming, or gasification of biomass, waste and/or fossil fuel wherein the $CO_2$ feedstock is separated from the pyrolysis, partial oxidation, steam reforming, dry reforming, autothermal reforming, or gasification product.

6. Process according to any one of the preceding claims, wherein the impurities comprise one or more of CO, $H_2$, and $CH_4$, preferably the impurities comprise one or more of CO and $H_2$.

7. Process according to any one of the preceding claims, wherein the total amount of impurities is less than 20 mol% on total of the dry $CO_2$ feedstock, more preferably less than 10 mol% on total of the dry $CO_2$ feedstock.

8. Process according to any one of the preceding claims, wherein the oxidant is selected from oxygen, air, steam, $CO_2$, or combinations thereof, more preferably the oxidant is air.

9. Process according to any one of the preceding claims, wherein the chemical looping reactor is a fixed bed reactor or a fluidized bed reactor.

10. Process according to any one of the preceding claims, wherein the chemical looping reactor comprises an inert solid, preferably a particulate inert solid.

11. Process according to any one of the preceding claims, wherein the total amount of impurities is in the range of 0.00001 to 10 mol% based on total of the dry $CO_2$ feedstock, preferably 0.001 - 5 mol%.

12. Process according to any one of the preceding claims, comprising the following sequential steps:

    a. a reduction step wherein the $CO_2$ feedstock is provided to a chemical looping reactor, the redox catalyst is reduced, and impurities in the $CO_2$ feedstock are oxidized to yield a treated $CO_2$ feedstock;
    b. optionally a first cooling step wherein the temperature of the chemical looping reactor is lowered;
    c. optionally a first purge step wherein a first purge gas is provided to the chemical looping reactor and the treated $CO_2$ feedstock is purged from the reactor;
    d. an oxidation step wherein an oxidant is provided to the chemical looping reactor, the reduced redox catalyst is oxidized, and the oxidant is reduced to yield a spent oxidant;
    e. optionally a second cooling step wherein the temperature of the chemical looping reactor is lowered; and
    f. optionally a second purge step wherein a second purge gas is provided to the chemical looping reactor and the spent oxidant is purged from the reactor,

    wherein steps (b) and (c) are performed in any order, wherein steps (e) and (f) are performed in any order.

13. Process according to claim 12, comprising step (b) and/or step (e).

14. A process for obtaining a purified $CO_2$ feedstock comprising:

    I. pyrolysis, partial oxidation, steam reforming, dry reforming, autothermal reforming, or gasification of biomass, waste and/or fossil fuel,
    II. separating the $CO_2$ feedstock from the pyrolysis, partial oxidation, steam reforming, dry reforming, autothermal reforming, or gasification product wherein the $CO_2$ feedstock comprises more than 80 mol% $CO_2$ on total of the dry $CO_2$ feedstock,
    III. subjecting the $CO_2$ feedstock to the process for the oxidation of impurities in a $CO_2$ feedstock according to any one of claims 1-13 to deliver the purified $CO_2$ feedstock, and
    IV. optionally separation of $H_2O$ from the purified $CO_2$ feedstock by condensation.

Figure 1A

Figure 1B

Figure 2

Figure 3

Figure 4

Figure 5

Figure 6

| | Europäisches Patentamt European Patent Office Office européen des brevets | **EUROPEAN SEARCH REPORT** | **Application Number** EP 23 21 8226 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/265764 A1 (ABDULALLY IQBAL [US] ET AL) 15 September 2016 (2016-09-15) * claims 1-6, 9-13, 16-27 * * the whole document * ----- | 1-14 | INV. C01B32/50 C10K3/04 |
| X | US 2014/377158 A1 (ANDRUS JR HERBERT E [US] ET AL) 25 December 2014 (2014-12-25) * paragraphs [0007] - [0009]; claim 1 * * the whole document * ----- | 1-14 | |
| X | US 10 576 442 B1 (CHYOU YAU-PIN [TW] ET AL) 3 March 2020 (2020-03-03) * column 4, line 44 - column 5, line 27 * * the whole document * ----- | 1-14 | |

|  | TECHNICAL FIELDS SEARCHED (IPC) |
|---|---|
|  | C01B C10K |

The present search report has been drawn up for all claims

| Place of search | Date of completion of the search | Examiner |
|---|---|---|
| The Hague | 6 June 2024 | Straub, Thomas |

## ANNEX TO THE EUROPEAN SEARCH REPORT
## ON EUROPEAN PATENT APPLICATION NO.

EP 23 21 8226

This annex lists the patent family members relating to the patent documents cited in  the above-mentioned European search report.
The members are as contained in the European Patent Office EDP file on
The European Patent Office is in no way liable for these particulars which are merely given for the purpose of information.

06-06-2024

| Patent document cited in search report | | | Publication date | Patent family member(s) | | Publication date |
|---|---|---|---|---|---|---|
| US 2016265764 | A1 | | 15-09-2016 | CA | 2978462 A1 | 15-09-2016 |
| | | | | CN | 107427769 A | 01-12-2017 |
| | | | | JP | 6666355 B2 | 13-03-2020 |
| | | | | JP | 2018510313 A | 12-04-2018 |
| | | | | US | 2016265764 A1 | 15-09-2016 |
| | | | | WO | 2016145034 A1 | 15-09-2016 |
| US 2014377158 | A1 | | 25-12-2014 | CA | 2852655 A1 | 21-12-2014 |
| | | | | CN | 104226219 A | 24-12-2014 |
| | | | | JP | 5951686 B2 | 13-07-2016 |
| | | | | JP | 2015016467 A | 29-01-2015 |
| | | | | US | 2014377158 A1 | 25-12-2014 |
| US 10576442 | B1 | | 03-03-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016145034 A
- WO 2010099555 A1
- WO 2022053692 A

**Non-patent literature cited in the description**

- **WANG et al.** Carbon recycling - An immense resource and key to a smart climate engineering: A survey of technologies, cost and impurity impact. *Renew. Sustain. Energy Rev.*, 2020, vol. 131, 110010
- **PORTER et al.** The range and level of impurities in CO2 streams from different carbon capture sources. *Int. J. Greenh. Gas Control*, 2015, vol. 36, 161-174